# EUROPEAN PATENT SPECIFICATION

(11) **EP 1 268 176 B1**
(45) Date of publication and mention of the grant of the patent: **03.03.2004**
(21) Application number: 00980958.3
(22) Date of filing: 04.12.2000
(51) Int. Cl.: B32B 1/00, B32B 27/10, B32B 27/30, B32B 27/36, B32B 27/20

(54) **PAPERBOARD TRAY HAVING CRACK-RESISTANT BARRIER COATING**
PAPPTRÄGER MIT REISSBESTÄNDIGER BARRIERENBESCHICHTUNG
PLATEAU EN CARTON RECOUVERT D'UN REVETEMENT DE PROTECTION RESISTANT AUX FISSURES

(30) Priority: 03.12.1999 US 454372
(43) Date of publication of application: 02.01.2003
(73) Proprietor: Blue Ridge Paper Products Inc., Wayneville, NC 28786 (US)
(72) Inventor: DENNEY, Alan, W., Clyde, NC 28721 (US); DEWEESE, Jerry, Sylva, NC 28779 (US)
(74) Representative: Müller-Boré & Partner Patentanwälte
(86) International application number: PCT/US2000/032884
(87) International publication number: WO 2001/039968

(56) References cited:
- JP-A- 2 218 740
- US-A- 4 343 858
- US-A- 4 391 833
- US-A- 4 455 184
- US-A- 4 469 258
- US-A- 4 900 594
- US-A- 5 968 647

## Description

### Related Applications

This application claims the benefit of US application having serial number of 09/454,372, filed on December 3, 1999.

### Background of the Invention

This invention relates to ovenable food containers and more particularly to an ovenable food tray formed from a paperboard laminate. More specifically, this invention is directed to a polyester/paperboard laminate having an extruded layer of a mixture of polyester and a plasticizer which allows a deep draw food container to be formed in which the polyester layer resists cracking.

A variety of paperboard trays which serve as food containers for use in electric, gas, and microwave ovens are well known in the art. For certain food products, it is desirable to supply a deep draw tray having a tray depth of 1.5 inches (3.8 cm) or greater. Heretofore, deep draw, die-formed paperboard trays have been prone to the formation of fine cracks within the polyester barrier layer. Such cracks are more pronounced when using dark pigmented polyester materials. The cracks are indicative of a loss of the barrier properties of the tray. As a result, the food product no longer has the protection of a barrier coating. Further, the resulting cracking is aesthetically displeasing to the consumer. Accordingly, there is a need for a polyester barrier material which allows the crack-free formation of a deep draw tray.

A variety of ovenable food containers are known within the art having a paperboard substrate coated with a food contacting surface of a polyester such as a food grade polyethylene terephthalate (PET). A process for preparing a polyester paperboard laminate is disclosed in U.S. Patent No. 4,455,184 assigned to Blue Ridge Paper Products and incorporated herein by reference. The process provides coextruding a polyester layer and a polymeric adhesive layer as a single step while maintaining separate layers.

U.S. Patent No. 4,343,858, assigned to Blue Ridge Paper, Inc. and incorporated herein by reference, discloses a pigment coated paperboard suitable for food containers in which the food contact layer is a polyester which is adjacent an intermediate layer of a pigmented acrylic ester. Since the pigmented layer is not part of the surface layer, the coated paperboard is suitable for use in food containers.

U.S. Patent No. 4,757,940, incorporated herein by reference, is directed to an ovenable paperboard food tray having a food contacting surface of polyester along with various flame retardants or paper laminates applied to the non-food contact surface.

U.S. Patent No. 4,026,458, incorporated herein by reference, discloses a paperboard coated food tray having a depth of about 1.375 inches. The barrier coating is not believed suitable for the formation of a deep draw ovenable container.

While the art discloses a number of teachings directed to various barriers suitable for food containers, and more specifically ovenable food trays, there remains a need for improvement and variation within the art.

### Summary of the Invention

This invention relates to a deep draw paperboard tray which exhibits an improved food contacting surface which has a pigment additive therein and which following a deep draw pressure forming step maintains a crack-free finish.

The invention may be practiced by coating a paperboard substrate with a food grade resin such as a polyethylene terephthalate (PET). The PET layer further comprises a plasticizer such as ethyl methyl acrylate (EMA). The polyester polymeric coating may further comprise a desired pigment which may either be preblended into the EMA or into the PET. The EMA, PET, and the pigment are mechanically blended and then extrusion coated as a single barrier layer to the paperboard stock. Hereafter, the paperboard having the composite laminate may be formed by standard press tray methods using heat and pressure within a die. The polymeric coating allows for a "deep draw" receptacle to be formed. The plasticizer avoids the tendency of prior art polyester barriers to crack or split at the corners or sharp bends of the formed tray structure. Thereafter, the pressure formed paperboard trays may be filled with food products, frozen, packaged, and shipped for subsequent consumption.

### Brief Description of the Drawings

A full and enabling disclosure of the present invention, including the best mode thereof, to one of ordinary skill in the art, is set forth more particularly in the remainder of the specification, including reference to the accompanying drawings.
Fig. 1 is a diagrammatic cross-section of a laminate of the invention;
Fig. 2 schematically illustrates the production of a laminate in accordance with the process of the present invention; and
Fig. 3 is a perspective view of a formed tray made in accordance with the present invention.

### Detailed Description of the Preferred Embodiments

Reference now will be made in detail to the embodiments of the invention, one or more examples of which are set forth below. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used on another embodiment to yield a still further embodiment. Thus, it is intended that the present invention cover such modifications and variations as come within the scope of the appended claims and their equivalents. Other objects, features, and aspects of the present invention are disclosed in, or are obvious from, the following detailed description. It is to be understood by one of ordinary skill in the art that the present discussion is a description of exemplary embodiments only and is not intended as limiting the broader aspects of the present invention, which broader aspects are embodied in the exemplary constructions.

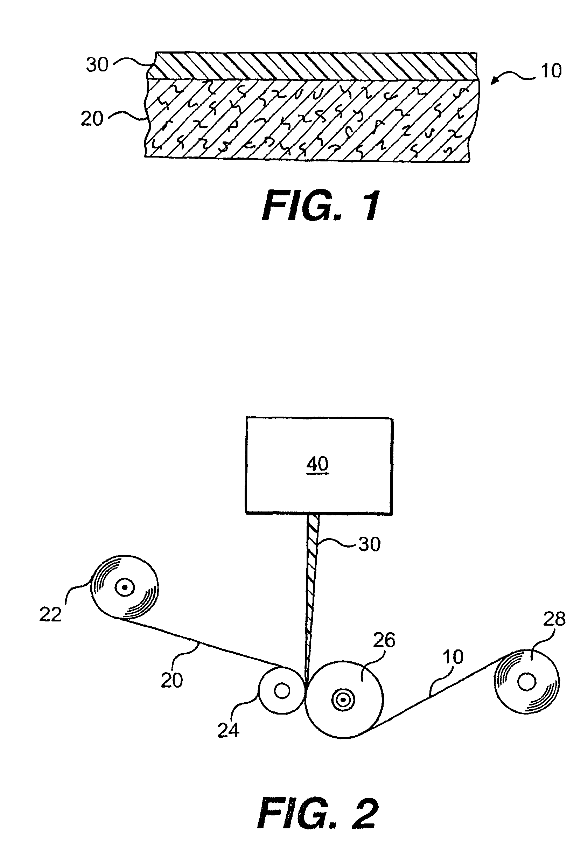

As seen in reference to Fig. 1, a laminate 10 is illustrated which comprises a paperboard substrate 20 and a barrier layer 30. Laminate 10 may be provided from any number of conventional paperboard products. Preferably, paperboard 20 is selected from moldable paperboard stock which is suitable for the formation of deep draw food containers for use in electric, gas and microwave ovens.

Depending upon the end use requirements of the end product trays, various sizing agents, additives, and fillers as are conventionally employed within the paperboard art may be used. For instance variations to the wick properties may be made by incorporating a sizing agent such as an alkyl ketene dimer. However, the presence or absence of a sizing agent or other additives does not play a role in the present invention.

A variety of suitable food grade paperboard substrates are known as set forth in the patents discussed above. Further, the assignee of the present invention offers several paperboard products suitable for use in the present invention.

Barrier coating 30 is an extruded coating applied as a single layer to form a food contacting surface on board 20. Coating 30 is comprised of a mixture of a polyester resin such as polyethylene terephthalate, herein after referred to as PET. However, it is understood that when reference to PET is made, such reference may include other suitable polyester materials such as polybutylene terephthalate (PBT).

In addition to PET, barrier layer 30 further comprises ethyl methyl acrylate (EMA) polymer which is mechanically blended with the PET prior to extrusion. The barrier coating may further comprise a pigment. When pigments are used, it has been found useful to pre-blend the pigment with an either the EMA or the PET. Pigment concentrates which are pre-blended with these materials are commercially available, such as LTB 9418, a black pigmented EMA (Colortech, Brampton, Ontario, Canada). The PET, the EMA, and the pigment are mechanically blended and extruded as a single coating onto the paperboard.

As set forth in more detail in the examples which follow, the quantity of the coating material can be varied depending upon the substrate and the intended use of the subsequently formed trays. The trays are typically formed by a press-tray method in which the paperboard-barrier laminate is formed into a tray by combination of heat and pressure within a die. In accordance with this invention, it has been found that creating a deep draw to the tray, defined herein as a tray depth of 1.5 inches (3.8 cm) or greater, more preferably having a depth of 1.87 inches (2.22 cm) or greater, has, heretofore, resulted in pigmented polymeric coatings which crack or split along sharp ends or corners of the tray structure. The addition of EMA as a plasticizer, which is pre-blended with the PET and any desired pigment, results in an extrudable pigmented barrier coating for a paperboard laminate which can be deep drawn without the undesired cracking or splitting of the polymeric coating.

In the simplest embodiment, the barrier coating 30 may comprise the only layer present on the paperboard laminate. However, the present barrier coating is compatible with other coatings and extruded layers which may be necessary or desirable on the end product. Likewise, the thickness of the barrier coating may be varied depending upon the needs of the end product. For instance, the formation of an ovenable tray may require varying thicknesses of the coating composition depending upon the moisture content, fat content, or end use oven temperature of the food packaged within the container.

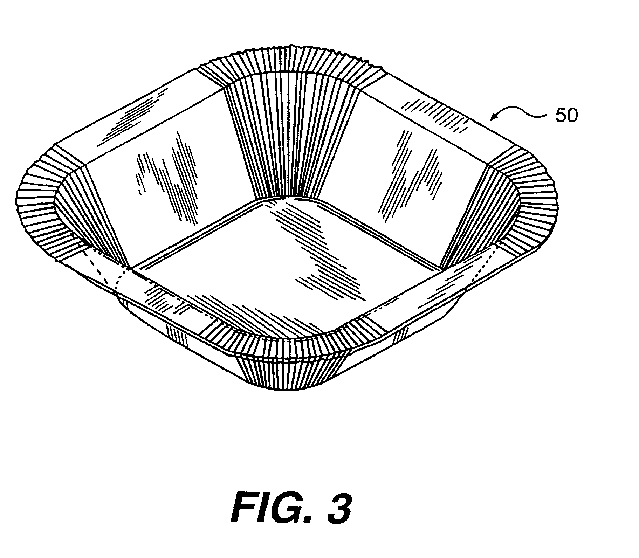

As seen in Fig. 3, a deep draw container 50 is provided by the barrier laminate 10. The paperboard support structure is coated along at least the food contact surface with the barrier coating 30 described above. Container 50 may have pleated corners or edges and preferably has a receptacle depth of about 1⅞ inches.

### Example 1

The starting material for this example was a paperboard having an average basis weight of 195 per 3,000 square feet average caliber of 0.01550. The paperboard was extrusion coated on one side with the barrier composition comprising 23 pounds of PET per 3,000 square feet, 3.0 pounds of EMA per 3,000 square feet, and an 11.5 percent (by weight) loading of pigment premixed with the PET/EMA. The barrier coating components were mechanically mixed and extruded as a single barrier coating as set forth in Fig. 2. The barrier coating had an average coating weight of 26 pounds per 3,000 square feet. Fig. 2 diagrammatically illustrates the coextrusion process for producing the laminate of this invention. The paperboard 20 is fed from feed roll 22 to pressure roll 24 and chill roll 26. An extrusion apparatus 40 comprises an internal combining die and provides the molten layer consisting of the PET, EMA, and pigment which is thereafter extruded as a single layer.

The molten barrier layer 30 is received on the paperboard in the vicinity of pressure roll 24, and the coating layer is formed into laminate by means of pressure roll 24 and chill roll 26. The subsequently formed laminate 10 can then be withdrawn for storage by take-up roll 28.

The barrier coated paperboard is thereafter suitable for conversion into a tray using known methods of pressure forming paper trays consisting of the steps of first cutting and creasing a blank using a steel rule die, then placing the blank in a two-piece heated forming die where the paperboard is simultaneously drawn into the die and shaped to form the contours of the tray.

The paperboard coating as set forth in Example 1 may be formed into a tray having a depth of 1⅞ inches. The resulting tray has been found suitable for use as a microwavable container in the frozen food industry.

### Example 2

The starting material for this example was a paperboard having an average basis weight of 195 pounds per 3,000 square feet and having an average caliper of 0.01950 inches. The coating composition was prepared as set forth in Example 1 and applied at an average coating weight of 26 pounds per 3,000 square feet of board. The extruded board was found suitable for use as an ovenable board in gas, electric and microwave ovens.

### Example 3

The starting material for this example was a paperboard having a basis weight of 310 pounds per 3,000 square feet and an average caliper of 0.02700 inches. The coating composition was prepared as described above in Example 1 and was applied at a coating weight of 26 pounds per 3,000 square feet. The extruded paperboard was evaluated by formation into trays as described above and subsequently evaluated as an ovenable tray which was satisfactory for use in microwave, electric and gas ovens.

In the examples described above, the improved blended barrier composition was found to completely eliminate the formation of cracks in the pigmented polymeric coating. While not wishing to be limited by theory, it is believed that the EMA plasticizer, when pre-blended with a pigment and PET, allows a single extrudable barrier layer to be formed on the surface of the board. The barrier layer is subsequently able to be heat pressed into a deep draw tray which avoids the formation of cracks and fissures within the pigmented polymeric coating.

It is believed that other plasticizers besides EMA are useful in the present invention, the selection and evaluation of which can be easily accomplished by the incorporation of the plasticizer into the PET mixture. Following coating of the composition onto the board, the board can be drawn as described above and evaluated for the formation of cracks.

It has also been found in accordance with this invention that an improved barrier layer may be formed using unpigmented polymeric coatings. The examples set forth above provide an improved barrier coating when the pigment is omitted from the blended barrier composition. The beneficial properties and improvements reported above are maintained in the unpigmented compositions. While the cracks and fissures within the prior art unpigmented coating compositions used heretofore are not as readily apparent, such flaws still exist and contribute to degraded performance of the resulting ovenable trays. The unpigmented barrier compositions described in the present application offer a polymeric coating better suited for heat pressing into a "deep draw" tray.

Although preferred embodiments of the invention have been described using specific terms, devices, and methods, such description is for illustrative purposes only. The words used are words of description rather than of limitation. It is to be understood that changes and variations may be made by those of ordinary skill in the art without departing from the spirit or the scope of the present invention, which is set forth in the following claims. In addition, it should be understood that aspects of the various embodiments may be interchanged, both in whole or in part. Therefore, the spirit and scope of the appended claims should not be limited to the description of the preferred versions contained therein.

## Claims

1. A process for forming a laminate of paperboard and polyester for use in the preparation of ovenable, press-molded containers comprising:
extruding a molten barrier layer comprising mixing a polyethylene terephthalate resin, an ethylene methyl acrylate copolymer, and a pigment and
thereby forming a coating compound;
melting the coating compound;
extruding the coating compound onto a paperboard substrate to form a single barrier layer forming a food contact surface layer.

2. A process for forming a laminate of a paperboard and an extruded barrier layer suitable for use in the preparation of deep draw ovenable containers comprising:
mixing at room temperature a polyethylene terephthalate resin and a plasticizer, thereby forming a coating compound;
melting the coating compound;
extruding the coating compound onto a paperboard substrate to provide a coating layer of between 9.98 and 11.79 kg (22 and 26 pounds) per 278,71 m² (3,000 square feet);
pressing the paperboard-barrier laminate into a tray with a combination of heat and pressure, the tray having a depth of about 4.7 cm.

3. The process according to claim 1 wherein said step of providing a pigment further comprises supplying a pigment in a polyethylene terephthalate carrier.

4. The process according to claim 1 wherein the step of providing a pigment further comprises supplying the pigment preblended in an ethyl methyl acrylate copolymer.

5. A unitary paperboard blank for forming an ovenable food container comprising a paperboard coated on a food contacting surface with a barrier coating, the barrier coating comprising a mixture of an effective amount of polyethylene terephthalate, ethyl methyl acrylate, and a pigment; wherein the coated paperboard may be formed into a deep draw tray.

6. The paperboard according to claim 5 wherein the barrier coating has a coating weight of between 9.98 and 11.79 kg (22 and 26 pounds) per 278,71 m² ( 3,000 square feet).

7. The paperboard according to claim 5 or 6 wherein the paperboard has an average basis weight of between 72.57 to 140.61 kg (160 to 310 pounds) per 278,71 m² (3,000 square feet).

8. An ovenable food tray comprising:
a paperboard laminate coated on its food contacting surface with a barrier coating comprising a mixture of polyethylene terephthalate and ethyl methyl acrylate forming a single extruded layer;
a receptacle defined by an interior portion of the laminate, the barrier layer defining a food contacting surface wherein the edges and the corners of the receptacle maintain an uninterrupted and contiguous barrier.

9. The food tray according to claim 8 wherein the barrier coating further comprises a pigment.

10. The ovenable food tray according to claim 8 or 9 wherein the barrier coating has a coating weight of between 9.98 and 11.79 kg (22 and 26 pounds) per 278,71 m² (3,000 square feet).

11. The ovenable food tray according to anyone of claims 8 to 10 wherein the food tray comprises a paperboard having an average basis weight of between 72.57 to 140.61 kg (160 to 310 pounds) per 278,71 m² (3,000 square feet).

12. The ovenable food tray according to anyone of claims 9 to 11 wherein the pigment comprises about 11.5 percent by weight of the barrier coating.

## Patentansprüche

1. Verfahren zur Bildung eines Laminats aus Pappe und Polyester zur Verwendung in der Herstellung eines im Ofen verwendbaren, pressgeformten Behälters, umfassend
das Extrudieren einer geschmolzenen Sperrschicht, umfassend das Mischen eines Polyethylenterephthalatharzes, eines Ethylenmethylacrylatcopolymers und eines Pigments und dadurch das Bilden einer Beschichtungsverbindung, das Schmelzen der Beschichtungsverbindung,
das Extrudieren der Beschichtungsverbindung auf ein Pappesubstrat, um eine einzelne Sperrschicht zu bilden, die eine Oberflächenschicht zur Nahrungsmittelkontaktierung bildet.

2. Verfahren zur Bildung eines Laminats aus einer Pappe und einer extrudierten Sperrschicht, welches zur Verwendung in der Herstellung eines tiefgezogenen, im Ofen verwendbaren Behälters geeignet ist, umfassend
das Mischen eines Polyethylenterephthalatharzes und eines Weichmachers bei Raumtemperatur, wodurch eine Beschichtungsverbindung gebildet wird,
das Schmelzen der Beschichtungsverbindung,
das Extrudieren der Beschichtungsverbindung auf ein Pappesubstrat, um eine Beschichtungsschicht von zwischen 9,98 und 11,79 kg (22 und 26 Pfund) pro 278,71 m² (3.000 Quadratfuß) bereitzustellen,
das Pressen des Pappe-Sperrschicht-Laminats in eine Schale mit einer Kombination von Wärme und Druck, wobei die Schale eine Tiefe von etwa 4,7 cm aufweist.

3. Verfahren nach Anspruch 1, wobei der Schritt des Bereitstellens eines Pigments weiter das Zuführen eines Pigments in einem Polyethylenterephthalatträger umfaßt.

4. Verfahren nach Anspruch 1, wobei der Schritt des Bereitstellens eines Pigments weiter das Zuführen des in einem Ethylmethylacrylatcopolymer vorgemischten Pigments umfaßt.

5. Einheitlicher Papperohling zur Bildung eines im Ofen verwendbaren Nahrungsmittelbehälters, umfassend eine mit einer Sperrbeschichtung auf einer Nahrungsmittel kontaktierenden Oberfläche beschichteten Pappe, wobei die Sperrbeschichtung ein Gemisch einer wirksamen Menge an Polyethylenterephthalat, Ethylmethylacrylat und eines Pigments umfaßt, wobei die beschichtete Pappe in eine tiefgezogene Schale geformt werden kann.

6. Pappe nach Anspruch 5, wobei die Sperrbeschichtung ein Beschichtungsgewicht von zwischen 9,98 und 11,79 kg (22 und 26 Pfund) pro 278,71 m² (3.000 Quadratfuß) aufweist.

7. Pappe nach Anspruch 5 oder 6, wobei die Pappe ein durchschnittliches Grundgewicht von zwischen 72,57 bis 140,61 kg (160 bis 310 Pfund) pro 278,71 m² (3.000 Quadratfuß) aufweist.

8. Im Ofen verwendbare Nahrungsmittelschale, umfassend
ein Pappelaminat, das auf seiner Nahrungsmittel kontaktierenden Oberfläche mit einer Sperrbeschichtung, welche ein, eine einzelne extrudierte Schicht bildendes Gemisch von Polyethylenterephthalat und Ethylmethylacrylat umfaßt, beschichtet ist,
einen Auffangbehälter, der durch einen inneren Bereich des Laminats definiert ist, wobei die Sperrschicht eine Nahrungsmittel kontaktierende Oberfläche definiert, worin die Kanten und die Ecken des Auffangbehälters eine ununterbrochene und kontinuierliche Sperre beibehalten.

9. Nahrungsmittelschale nach Anspruch 8, wobei die Sperrbeschichtung weiter ein Pigment umfaßt.

10. Im Ofen verwendbare Nahrungsmittelschale nach Anspruch 8 oder 9, wobei die Sperrbeschichtung ein Beschichtungsgewicht von zwischen 9,98 und 11,79 kg (22 und 26 Pfund) pro 278,71 m² (3.000 Quadratfuß) aufweist.

11. Im Ofen verwendbare Nahrungsmittelschale nach einem der Ansprüche 8 bis 10, wobei die Nahrungsmittelschale eine Pappe umfaßt, die ein durchschnittliches Grundgewicht von zwischen 72,57 bis 140,61 kg (160 bis 310 Pfund) pro 278,71 m² (3.000 Quadratfuß) aufweist.

12. Im Ofen verwendbare Nahrungsmittelschale nach einem der Ansprüche 9 bis 11, wobei das Pigment etwa 11,5 Gew.-% der Sperrbeschichtung umfaßt.

## Revendications

1. Procédé pour former un stratifié de carton et de polyester destiné à être utilisé dans la préparation de récipients moulés par compression, pouvant être passés au four, comprenant les étapes consistant :
à extruder une couche de barrière fondue formée en mélangeant une résine de poly(téréphtalate d'éthylène), un copolymère éthylène-acrylate de méthyle et un pigment, et à former ainsi un composé de revêtement ;
à faire fondre le composé de revêtement ;
à extruder le composé de revêtement sur un substrat en carton pour former une couche de barrière unique formant une couche de surface en contact avec les aliments.

2. Procédé pour former un stratifié de carton et d'une couche de barrière extrudée apte à l'utilisation dans la préparation de récipients produits par emboutissage profond, pouvant être passés au four, comprenant les étapes consistant :
à mélanger à température ambiante une résine de poly(téréphtalate d'éthylène) et un plastifiant, en formant ainsi un composé de revêtement ;
à faire fondre le composé de revêtement ;
à extruder le composé de revêtement sur un substrat en carton pour produire une couche de revêtement de 9,98 à 11,79 kg (22 et 26 lb) pour 278,71 m² (3 000 ft²) ;
à transformer par compression le stratifié de carton-couche de barrière en une barquette avec une association de chaleur et d'une pression, la barquette ayant une profondeur d'environ 4,7 cm.

3. Procédé suivant la revendication 1, dans lequel ladite étape consistant à fournir un pigment comprend en outre l'étape consistant à fournir un pigment dans un support en poly(téréphtalate d'éthylène).

4. Procédé suivant la revendication 1, dans lequel l'étape consistant à fournir un pigment comprend en outre l'étape consistant à fournir le pigment prémélangé à un copolymère éthyl-acrylate de méthyle.

5. Pièce en carton unitaire pour former un récipient alimentaire, pouvant être passé au four, comprenant un carton revêtu sur une surface en contact avec les aliments avec un revêtement de barrière, le revêtement de barrière comprenant un mélange d'une quantité efficace de poly(téréphtalate d'éthylène), d'éthyl-acrylate de méthyle et d'un pigment ; dans lequel le carton revêtu peut être transformé en une barquette par emboutissage profond.

6. Carton suivant la revendication 5, dans lequel le revêtement de barrière a un poids de revêtement de 9,98 à 11,79 kg (22 à 26 lb) pour 278,71 m² (3000 ft²).

7. Carton suivant la revendication 5 ou 6, qui a un grammage moyen de 72,57 à 140,61 kg (160 à 310 lb) pour 278,71 m² (3000 ft²).

8. Barquette alimentaire, pouvant être passée au four, comprenant :
un stratifié de carton revêtu sur sa surface en contact avec les aliments avec un revêtement de barrière comprenant un mélange de poly(téré-phtalate d'éthylène) et d'éthyl-acrylate de méthyle formant une couche extrudée unique ;
un réceptable défini par une partie intérieure du stratifié, la couche de barrière définissant une surface en contact avec les aliments, les bords et les angles du réceptacle maintenant une barrière ininterrompue et contiguë.

9. Barquette alimentaire suivant la revendication 8, dans laquelle le revêtement de barrière comprend en outre un pigment.

10. Barquette alimentaire, pouvant être passée au four, suivant la revendication 8 ou 9, dans laquelle le revêtement de barrière a un poids de revêtement de 9,98 à 11,79 kg (22 à 26 lb) pour 278,71 m² (3000 ft²).

11. Barquette alimentaire, pouvant être passée au four, suivant l'une quelconque des revendications 8 à 10, qui comprend un carton ayant un grammage moyen de 72,57 à 140,61 kg (160 à 310 lb) pour 278,71 m² (3000 ft²).

12. Barquette alimentaire, pouvant être passée au four, suivant l'une quelconque des revendications 9 à 11, dans laquelle le pigment représente environ 11,5% en poids du revêtement de barrière.
